# EUROPEAN PATENT SPECIFICATION

(11) **EP 3 869 117 B1**
(45) Date of publication and mention of the grant of the patent: **07.01.2026**
(21) Application number: 21157730.9
(22) Date of filing: 17.02.2021
(51) Int. Cl.: F24H 6/00, F24D 11/02, F24D 19/06, F24H 9/02

(54) **AIR CONDITIONING DEVICE**
KLIMATISIERUNGSGERÄT
DISPOSITIF DE CLIMATISASION

(30) Priority: 18.02.2020 IT 202000003275
(43) Date of publication of application: 25.08.2021
(73) Proprietor: Moretti, Massimo, 63827 Pedaso (FM) (IT)
(72) Inventor: MASSA, Federico, 63091 Venarotta (AP) (IT)
(74) Representative: Fiume, Orazio

(56) References cited:
- EP-A1- 3 358 279
- EP-A2- 0 240 441
- DE-A1- 19 702 903
- GB-A- 2 459 927
- US-A1- 2005 278 972
- US-A1- 2019 128 565
- US-B1- 6 503 458

## Description

### Field of the invention

The present invention relates to the field of air conditioning of public/private environments, and more specifically it relates to an air conditioning system which has at the same time an aesthetic functionality, but is also a viable solution for conditioning and optionally for the production of domestic hot water. "Air conditioning" means at least heating of environments.

### Known art

Air conditioning based on a thermodynamic heat pump circuit is known. The thermodynamic circuit includes a compressor and two heat exchangers.

In particular, two main technologies are known: those based on direct heat exchange and those based on indirect heat exchange.

In direct heat exchange, a heat exchanger - the condenser or evaporator, in relation to the operation of the air conditioner or heat pump respectively - is installed in the room to be conditioned and performs a heat exchange with the ambient air. The other heat exchanger, together with the compressor, is enclosed in a single casing installed in the external environment and therefore is generally referred to as an "external machine".

These air conditioning systems are dedicated only to the air conditioning of rooms, whereas the domestic hot water is produced separately and with other autonomous systems.

In systems with indirect heat exchange, in addition to the external machine, also the other heat exchanger, generally immersed in an accumulation tank, is installed outside the room to be air-conditioned. The storage tank is usually filled with water, which represents a thermal storage. In the case of heating, the same water acts as a carrier fluid, being pumped into the different rooms to be air-conditioned where water/air exchangers are installed, for example, floor-integrated heat exchangers or fan convectors.

Also in this case, the thermodynamic fluid compressor is arranged outside the civil environments, with a heat exchanger designed to exchange heat with the air of the external environment and the other heat exchanger is associated with a thermal storage tank, typically water. The thermal storage tank must be thermally insulated, as it is designed to contain hot water in winter and cold water in summer, when used for air conditioning storage, whereas it invariably contains hot water when used for domestic hot water.

Very often, in modern systems, the thermal storage tank is arranged inside a thermal compartment whereas the external machine must remain exposed to the external air in order to exchange heat with it.

Even when the thermal storage tank is installed in the thermal compartment, as this is not an air-conditioned place, the storage tank must be well insulated. When the thermal storage tank is intended for air conditioning, it is relatively large and its dimensions are further increased due to thermal insulation.

It is not always possible to have an external space in which to house the thermal storage tank. Therefore, it is sometimes impossible to install heat pump air conditioning systems with indirect heat exchange or in any case aimed at producing domestic hot water.

Therefore, although these systems are very reliable as well as extremely efficient, they are often not installed due to a lack of space outside the real estate unit.

GB2459927 discloses a heating arrangement including an insert assembly having a visible panel and modular heat pump, partially housed in a flow path extending behind panel, the heat pump including a flow heat exchanger in flow path.

### Summary of the Invention

Purpose of the present invention is to allow the installation of heat pump air conditioning systems with indirect heat exchange even in those situations in which a thermal compartment and in any case an external space is not available.

Another purpose of the present invention is to allow the installation of a heat pump air conditioning system with indirect heat exchange also in a real estate unit originally equipped with heating by means of a fluid fossil fuel boiler and radiators.

By a real estate unit for civil use an office or a home or a clinic and in general, any real estate unit not intended for industrial use, is meant.

The basic idea of the present invention is that of realizing a casing intended to be installed inside an environment of the real estate unit for civil use. In the casing a thermal storage tank is installed, a heat exchanger associated to the thermal storage tank, a fan convector operatively connected with said storage tank and a compartment for the installation of a furnishing element, such as an electric fireplace or an aquarium, a bookcase or television.

The casing is finished to look like a domestic piece of furniture, therefore it can be equipped with fine finishes such as, for example, wood paneling or lacquering.

Advantageously, by installing the thermal storage tank inside one of the rooms to be air-conditioned it is possible to limit or eliminate the insulation of the thermal storage tank intended for air conditioning, as the heat exchanges with the same environment are advantageous to the same environment to be air-conditioned.

Preferably, the fan convector is installed under the thermal storage tank in order to collect any condensation that may occur around the thermal storage tank.

As in traditional heat pump systems, the compressor with its relative heat exchanger is enclosed in a single casing defining the "external machine" that can be installed outside, suspended as for any direct exchange air conditioning system and operationally interconnected with the heat exchanger housed in the casing inside the real estate unit.

According to a preferred variant of the invention, the furnishing element, housed in its relative compartment, can consist of an electric fireplace that simulates the presence of a flame by means of colored flashes, so therefore, the users of the environment are led to believe that the casing is designed to house a fireplace actually intended to heat the environment.

In reality, the thermal storage tank is housed in the same casing for supplying further or all the rooms of the real estate unit for civil use, therefore it comprises means for the parallel or series connection of further heat exchange devices, for example additional fan convectors or floor radiators.

The dependent claims describe preferred variants of the invention forming an integral part of the present description.

### Brief description of the figures

Further purposes and advantages of the present invention will become clear from the following detailed description of an example of its embodiment (and its variants) and from the annexed drawings given purely for explanatory and non-limiting purposes, in which:
- figures 1 and 2 represent schematic views of front and side respectively of an air conditioning system for air conditioning according to an example of embodiment of the present invention;
- figures 3 and 4 represent respectively front and side schematic views of an air conditioning system for air conditioning according to another example of embodiment of the present invention;
- figures 5 and 6 represent respectively front and side schematic views of an example of the air conditioning system and domestic hot water production system according to the present invention;
- figures 7 and 8 represent respectively front and side schematic views of another air conditioning and domestic hot water production system according to the present invention;
- figures 9 and 10 represent respectively front and side schematic views of another air conditioning and domestic hot water production system according to the present invention;
- figure 11 represents a so-called external machine which typically comprises a thermodynamic fluid compressor, a thermodynamic fluid/air heat exchanger and an electric fan to optimize the heat exchange with the external environment.

The same reference numbers and letters in the figures identify the same elements or components.

In the context of this description, the term "second" component does not imply the presence of a "first" component. These terms are in fact used as labels to improve clarity and should not be understood in a limiting way.

The elements and characteristics illustrated in the various preferred embodiments, including the drawings, can be combined with each other without however departing from the scope of the present application as described below.

### Detailed description

The present invention relates to an air conditioning system with indirect exchange heat pump.

The present invention is based on a device S, intended to be installed inside an environment subject to air conditioning.

Device S including:
- a casing intended for installation in an air-conditioned environment, the casing defining
   ∘ a first compartment IN1 closed,
   ∘ a second compartment IN2 partially open, for the installation of an FC fan convector,
   ∘ a third compartment IN3 for the installation of an aesthetic element E,
- a tank of heat accumulation W1 of water, placed in the first compartment IN1,
- a first heat exchanger TEC1 of the liquid/ thermodynamic fluid type, operatively associated with the water thermal storage tank W1,
- a fan coil FC inserted in the second compartment IN2 and operationally connected to the thermal storage tank W1,
- an aesthetic element E inserted in the third compartment IN3, such as for example a bookcase and/or an aquarium and/or anelectric fireplace.

The concept of aesthetic element also includes a piece of furniture such as a bookcase, or a shelf with doors, or a bioethanol fireplace.

The air conditioning system also comprises an external machine EM, known per se, comprising a casing in which a thermodynamic fluid compressor is housed, an external heat exchanger, intended to be operationally interconnected at least with the first heat exchanger TEC1, and an electric fan to improve the heat exchange of the external heat exchanger with the external environment.

The first compartment IN1 is completely external to the circulation path of the air heated or cooled by the fan-convector.

In fact, according to the present invention, the thermal storage tank is not only at the service of the room in which the device is installed but also of further rooms connected or connectable to this device.

As is known, the FC fan convector comprises its own water-air heat exchanger with a fan coupled to the heat exchanger, to facilitate heat exchange.

The operations of cleaning and routine maintenance of the device therefore do not concern the first compartment IN1 but exclusively the second compartment IN2, by removing the aesthetic/furniture element. This fact is extremely advantageous, since the wall PF, which is the front one and which adjoins the first compartment IN1 can be suitably finished in continuity and analogy as the walls of the environment in which the device is inserted, not being provided the relative removal if not for serious malfunctions.

The first heat exchanger TEC1 is preferably housed in the first compartment IN1.

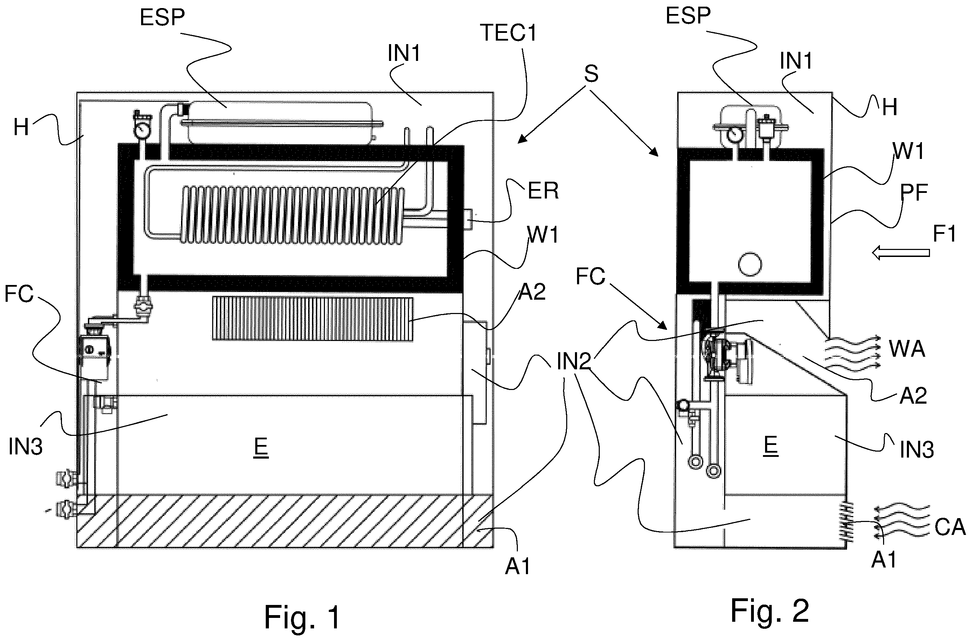

With reference to Figures 1 and 2, it is preferred that the first compartment IN1 for the thermal water storage tank W1 is made in a high part of the casing H, so as to connect the fan convector FC directly to the storage tank W1 by placing the fan convector immediately below the thermal storage tank W1.

With reference to Figure 2, in a side view, it is understood that the second compartment IN2 wraps around the third compartment IN3, substantially forming a lying U or a sort of C, around the third compartment IN3.

In particular, below the third compartment IN3 there is a duct which allows air to be sucked in at floor level through the lower opening A1.

For this purpose, a lower opening A1 is made in the front face F1 of the casing H, at its base.

Immediately above the third compartment, there is a duct with relative upper opening A2 for the evacuation of air previously sucked in from the lower opening A1 and treated by the fan convector FC, installed behind the third compartment IN3.

In other words, the fan convector is arranged in the less accessible portion of the casing, leaving the third compartment IN3 exposed to the outside, to accommodate the aforementioned aesthetic element E.

Both the lower opening and the upper opening can be equipped with suitable grids or aesthetic elements that allow the passage of air by masking the respective openings.

The upper opening A2 is located in a medial area of the entire height of the casing H.

In fact, it is advantageous to have ducts that are not excessively long in order not to worsen the load losses which must be compensated by a greater blowing energy.

It must be clear that it is particularly advantageous to have the second and third compartment arranged as described above, i.e. the second compartment that surrounds the third compartment, but it is not mandatory that the first compartment is placed above the group formed by the second and third compartments.

For example, in the case of a bookcase, it may be advantageous to have the first compartment IN1 with the thermal storage tank in the lower part of the casing H and the second/third compartment arranged above. This would allow easier access to the books arranged in the bookcase, but would lead to a worsening of the stratification of hot air in the room.

Therefore, although the configurations shown in the figures are not mandatory, they are optimal from the point of view of climatic comfort in the installation environment of the S device.

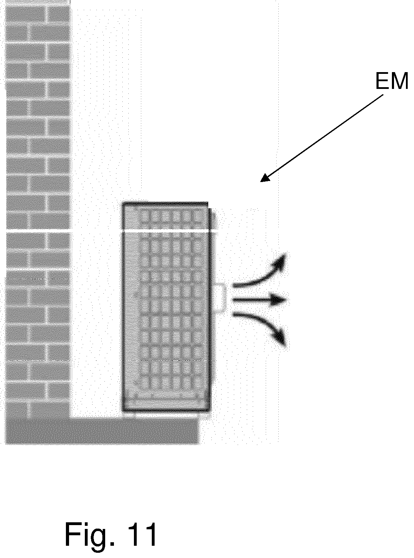

A processing unit can be installed in the first or second compartment, not schematized only for greater clarity of the drawings, which controls the operation of the external machine EM, see figure 11, and at least of the fan convector FC installed in the same casing H.

Since the thermal storage tank is serviceable to other rooms subject to air conditioning, then, the processing unit can also interact with as many fan convectors installed in the other rooms.

Therefore, means are arranged in the casing H for connecting the other fan convectors both hydraulically to the thermal storage tank and electrically to the processing means.

According to a preferred variant of the invention, in the third compartment IN3, intended for the aesthetic element, an electric fireplace E is installed which is able to reproduce the effects of a real flame and is internally equipped with a water tank which guarantees a flame autonomy preferably of 8 hours and with provision for connection to the water mains. The burner is able to replicate the effect of the flame thanks to a system of LED lights and a jet of steam generated by a vaporizer that takes water from said internal tank.

The third compartment is preferably watertight, so as to be immune to the humidity that can generate the storage tank or the fan convector or on the contrary to prevent the electric fireplace from vaporizing water, so damaging the fan convector, or the processing unit.

The third compartment IN3 can also house a bookcase or an aquarium or a television.

The thermal storage tank is preferably 70 liters.

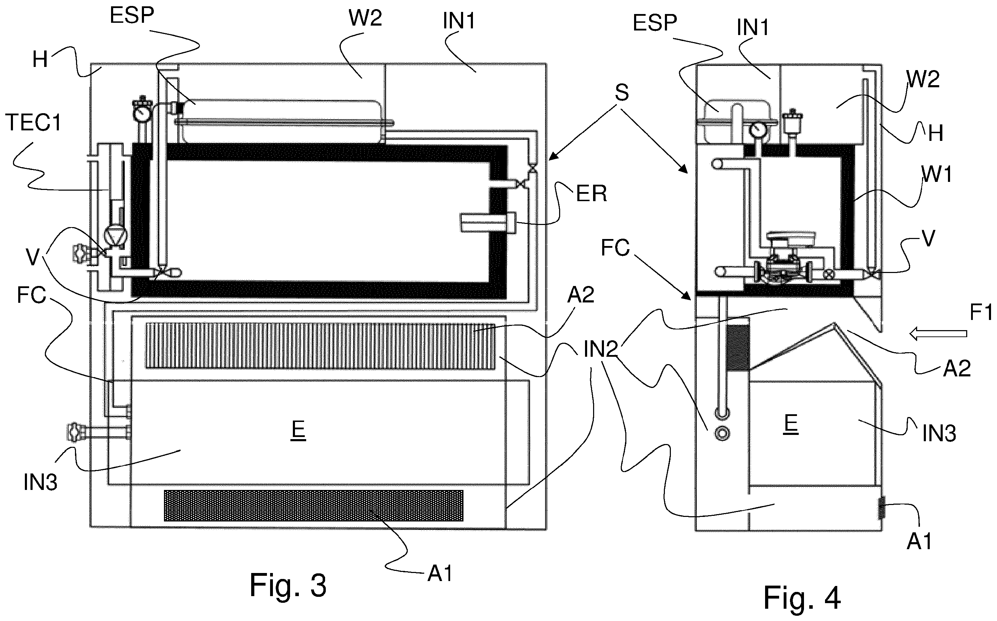

The solutions of figures 1 and 3 differ only in that in figure 1, the heat exchanger TEC1 is inserted in the storage tank W1, while in figure 3, a plate-type exchanger is used operatively connected to the tank W1, but placed outside the latter.

Furthermore, in the solution of Figure 3, there is a further thermal storage tank W2. This second thermal storage tank can be designed to contain domestic hot water to supply a bathroom and/or a kitchen with hot water.

Therefore, the plate-type heat exchanger TEC1 is operatively associated with both the first thermal storage tank W1 and the second thermal storage tank W2, by means of valves V.

Such valves V make it possible to connect once one, or the other thermal storage tank.

For example, in winter, without inverting the thermodynamic cycle, the plate heat exchanger TEC1 is now connected to the first, then to the second thermal storage tank to obtain predetermined operating temperatures of the same tanks.

In summer, when cooling of the rooms and at the same time the accumulation of domestic hot water is required, a switching of the interconnection between the plate heat exchanger and the two thermal storage tanks is accompanied by the inversion of the thermodynamic cycle, so to produce hot water in one thermal storage tank and cold water in the other thermal storage tank.

In fact, there is no thermal connection between the fluid/air exchanger of the external unit EM arranged externally and the accumulators W1 and W2 arranged internally. In other words, the external unit is connected with the internal device S exclusively by means of the circulation ducts of the thermodynamic fluid, such as for example R410 and the like.

The inversion of the thermodynamic cycle in heat pump systems is per se known.

An expansion vessel ESP can be present and operatively connected to a tank, for example W1, intended to power the fan convector FC.

The expansion tank is generally designed to guarantee a constant pressure inside the heating water system or the domestic hot water distribution system, avoiding risky overpressures. Therefore, two separate expansion vessels can be provided, one for the heating water system and the other for the pressurization of the domestic hot water system.

In all the variants described above or below, it is possible to use an emergency resistor ER, installed to deal with any faults in the external machine EM.

An emergency resistance can be installed in the thermal storage tank intended for air conditioning and another emergency resistance can be installed in the thermal storage tank intended for the production of domestic hot water.

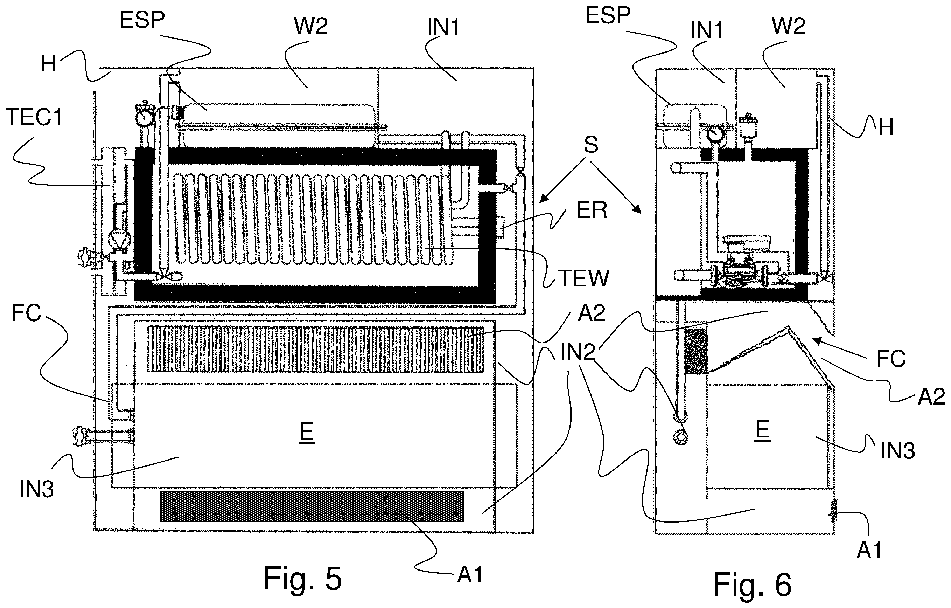

Figures 5 and 6 show a further preferred variant of the invention, in which the position of the two thermal storage tanks are reversed. Nevertheless, W1 continues to indicate the thermal storage tank associated with heating, while W2 indicates the thermal storage tank for producing domestic hot water. Obviously, in the schematic figures the dimensions and the relationships between them are not realistic.

Figure 5 shows that a heat exchanger TEW of the liquid/ liquid type (water/water) is inserted in the thermal storage tank W2. This is advantageous to avoid pollution of the domestic hot water with sediments that may accumulate in the thermal storage tank W2. In this case, therefore, the heat exchange between the thermodynamic fluid and the domestic hot water is doubly indirect, as the "technical" water, that is, remained inside the thermal storage tank W2, is first heated and this, in turn, heats the water circulating in the exchanger TEW which heats the water in the thermal storage tank W2 for the production of domestic hot water.

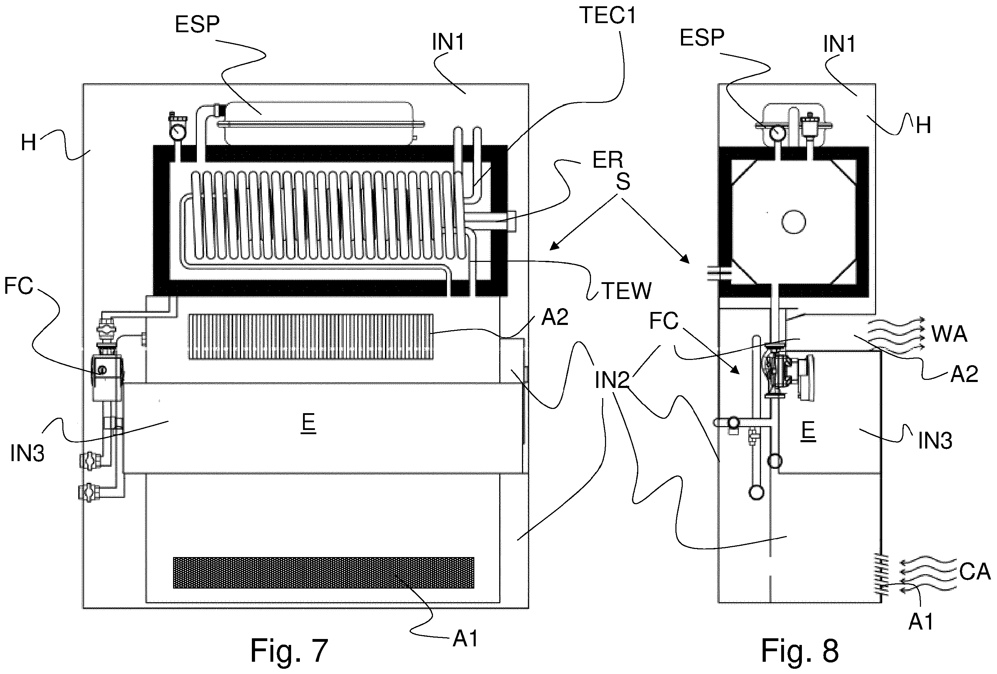

Figures 7 and 8 show a further diagram in which, however, only one thermal storage tank is used as in the example of Figures 1 and 2.

According to this diagram, the thermodynamic fluid heat exchanger TEC1 and the liquid/liquid heat exchanger TEW for the production of domestic hot water are both inserted in the same thermal storage tank, which for convenience is indicated as W1/W2 as it is useful for both features.

It is evident that in summer it is not possible to air-condition and produce domestic hot water at the same time, therefore, it is necessary to give up one or the other functionality, since, while reversing the thermodynamic cycle, the times for heating or cooling the thermal accumulation would be excessively long and the operation would be expensive and inefficient.

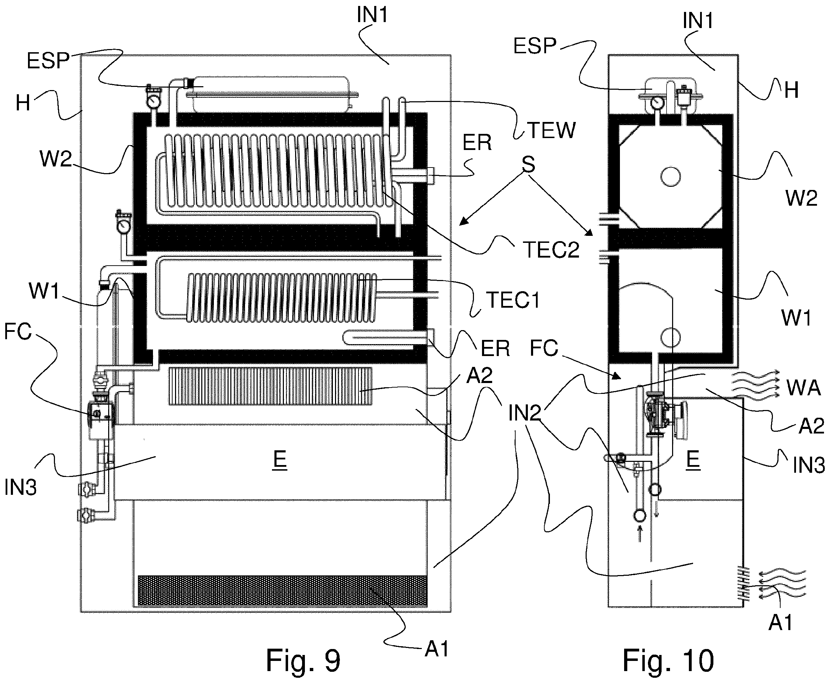

Figures 9 and 10 show a further preferred variant of the invention, intended both for heating and for producing domestic hot water.

There are two thermal storage tanks:
- W1 associated with air conditioning, in which a first exchanger TEC1 is inserted, where a thermodynamic fluid circulates,
- W2 associated with the production of domestic hot water, in which a second exchanger TEC2 is inserted where a thermodynamic fluid circulates and on which a liquid/liquid heat exchanger TEW is wound, where domestic water circulates.

For each thermal storage tank there can be an expansion tank ESP operatively associated with the respective thermal storage tank.

An emergency electric resistance ER can be associated with each thermal storage tank, to cope with situations in which the heat pump(s) should be in failure.

The thermodynamic fluid, for any of the variants, can be R22 or R410A and the like.

Since there are two thermodynamic fluid exchangers TEC1 and TEC2, two independent external machines or combined systems can be installed outside, in which, for example, two compressors with their respective external heat exchangers share a single casing and for example also a single electric fan.

The two thermodynamic fluid exchangers TEC1 and TEC2 belong to two separate and independent thermodynamic circuits.

It is also possible to use a single external compressor with a single external heat exchanger, in combination with two internal heat exchangers TEC1 and TEC2, even if this leads, in summer, to complex control schemes and long waits to create heat in the tank W2 and cold in the thermal storage tank W1.

As described herein, it is evident that plate-type thermodynamic exchangers, external to the respective thermal storage tank, or immersion thermodynamic exchangers in any of the variants can be used.

The system S described above aims to enter buyers' homes by providing a design and at the same time functional solution that allows the installation of indirect heat exchange heat pumps, even in situations where space is not available outside the real estate unit.

The solution with a single thermal storage tank is particularly suitable when this system is installed in real estate units previously equipped with a heating system with radiators and it is not (easily) possible to install fan convectors FC in all the rooms served by the same heating system.

Alternatively, the solution with a single thermal storage tank is advantageous where it is not necessary to produce domestic hot water, for example because the pre-existing water system does not allow it.

It is worth noticing that the storage tanks have a longitudinal shape and these can be arranged both horizontally as shown in the figures, but also vertically, for greater ease of access to parts that could be subject to maintenance.

Implementation variants of the described non-limiting example are possible, without however departing from the protective scope of the present invention, including all the embodiments equivalent for a person skilled in the art, to the content of the claims.

From the above description, the person skilled in the art is able to realize the object of the invention without introducing further structural details.

## Claims

1. Air conditioning device (S) intended to be installed inside an environment of a residential unit comprising
- a casing (H) defining
. a first compartment (IN1)
. a second compartment (IN2) partially open and separated from the first compartment (IN1), for the installation of a fan coil (FC),
. a third compartment (IN3) for the installation of an aesthetic element (E),
and the following components inserted in the casing (H):
- a first tank (W1) of thermal water storage,
- a first heat exchanger (TEC1) of the liquid/thermodynamic fluid type, operatively associated with the first tank (W1),
- a fan coil (FC) inserted in the second compartment (IN2)
- an aesthetic element (E) inserted in the third compartment (IN3) such as for example a bookcase and/or an aquarium and/or an electric fireplace,
**characterized in that** the first compartment (IN1) is closed and the first tank (W1) is inserted in the first compartment;
the fan coil (FC) is hydraulically connected to the first tank (W1) and the aesthetic element (E) is inserted in the third compartment (IN3) in such a way to be removable for cleaning and routine maintenance.

2. Device according to claim 1, wherein said aesthetic element includes an electric fireplace or an aquarium, a bookcase or a television.

3. Device according to one of the preceding claims having the shape of a right prism and in which the first compartment (IN1) is made in a high part of the casing (H) and wherein the second compartment (IN2) surrounds the third compartment (IN3), substantially forming a C, according to a side view, around the third compartment (IN3), and wherein the second compartment (IN2), below the third compartment (IN3) defines a first ducting which allows air to be sucked at floor level through a lower opening (A1) and wherein the second compartment (IN2), immediately above the third compartment (IN3), defines a second duct which allows the evacuation of air treated by the fan coil (FC).

4. Device according to claim 3, wherein the fan coil (FC) is positioned approximately rearward of the aesthetic element (E) with respect to a front view (F1) of the casing, so that the aesthetic element is exposed and visible from the front view.

5. A device according to any one of the preceding claims 1 - 4, wherein said first exchanger (TEC1) heat of the liquid/fluid thermodynamic type is of the type with plates, arranged externally to the first tank (W1) or is of the type immersion placed inside the first tank (W1).

6. Device according to any one of the preceding claims 1 - 5, further comprising a second tank (W2) of thermal storage, housed in said first compartment (IN1) and intended exclusively for the production of domestic hot water and wherein said first tank (W1) is intended exclusively to supply one or more fan coils.

7. Device according to any one of the preceding claims, further comprising an external unit (EM) comprising an electric compressor for the thermodynamic fluid and an external heat exchanger of the thermodynamic fluid/air type.

8. Device according to claim 7, wherein a third heat exchanger (TEC2) of the liquid/thermodynamic fluid type is associated with said second tank (W2) and wherein a second heat exchanger is housed in the second thermal storage tank (TEW) of the liquid/liquid type, intended for the production of domestic hot water and wherein said first heat exchanger (TEC1) and said third heat exchanger are supplied by said external unit (EM).

9. Device according to claim 8, wherein said outdoor unit comprises a single compressor and a three-way valve for selectively supplying the first (TEC1) or third (TEC2) heat exchanger, or comprises two compressors for supplying separately and independently said first and third heat exchangers.

10. Device according to any one of the preceding claims 1 to 9, wherein an emergency electrical resistance (W1, W1/W2) is housed in said first tank (W1) and/or in said second tank (W2) configured to activate in case of failure of the external machine.

11. Device according to any one of the preceding claims, wherein said casing (H) is coated with a valuable material, such as wood coating or lacquering.

12. Air conditioning system comprising a device (S) according to any one of claims 1 - 11 and an external machine (EM) for defining, as a whole, a heat pump.

## Patentansprüche

1. Klimaanlage (S) zur Installation in Wohnräumen, bestehend aus:
- einem Gehäuse (H), das
• ein erstes Fach (IN1)
• ein zweites Fach (IN2), das teilweise offen und vom ersten Fach (IN1) getrennt ist und für die Installation eines Gebläsekonvektors (FC) vorgesehen ist,
• ein drittes Fach (IN3) für die Installation eines ästhetischen Elements (E)
definiert,
wobei die folgenden Komponenten sind in das Gehäuse (H) eingesetzt:
- ein erster Thermalwasserspeicher (W1),
- ein erster thermodynamischer Flüssigkeits-/Fluid-Wärmetauscher (TEC1), der funktionell mit dem ersten Tank (W1) verbunden ist,
- ein Gebläsekonvektor (FC), der im zweiten Fach (IN2) eingesetzt ist,
- ein ästhetisches Element (E), das im dritten Fach (IN3) eingesetzt ist, wie z. B. ein Bücherregal, ein Aquarium oder ein elektrischer Kamin,
**dadurch gekennzeichnet, dass** das erste Fach (IN1) ist geschlossen und der erste Tank (W1) ist in das erste Fach eingesetzt; wobei der Gebläsekonvektor (FC) ist hydraulisch mit dem ersten Tank (W1) verbunden, und das ästhetische Element (E) ist in das dritte Fach (IN3) eingesetzt, sodass es zur Reinigung und routinemäßigen Wartung herausnehmbar ist.

2. Vorrichtung nach Anspruch 1, wobei das ästhetische Element einen elektrischen Kamin, ein Aquarium, ein Bücherregal oder einen Fernseher umfasst.

3. Vorrichtung nach einem der vorhergehenden Ansprüche, in Form eines geraden Prismas, wobei sich das erste Fach (IN1) in einem oberen Teil des Gehäuses (H) befindet und wobei das zweite Fach (IN2) das dritte Fach (IN3) umgibt und von der Seite betrachtet im Wesentlichen ein C um das dritte Fach (IN3) bildet, und wobei das zweite Fach (IN2) bildet unterhalb des dritten Fachs (IN3) einen ersten Kanal, der das Ansaugen von Luft in Bodennähe durch eine untere Öffnung (A1) ermöglicht, und wobei das zweite Fach (IN2) unmittelbar über dem dritten Fach (IN3) einen zweiten Kanal, der das Abführen der vom Gebläsekonvektor (FC) behandelten Luft ermöglicht.

4. Vorrichtung nach Anspruch 3, wobei der Gebläsekonvektor (FC) bezogen auf die Vorderansicht (F1) des Gehäuses etwa hinter dem ästhetischen Element (E) positioniert ist, sodass das ästhetische Element freigelegt und von vorne sichtbar ist.

5. Vorrichtung nach einem der vorhergehenden Ansprüche 1 bis 4, wobei der erste thermodynamische Flüssigkeits-/Fluid-Wärmetauscher (TEC1) vom Plattentyp ist und außerhalb des ersten Tanks (W1) angeordnet ist, oder vom Tauchtyp ist und sich innerhalb des ersten Tanks (W1) befindet.

6. Vorrichtung nach einem der vorhergehenden Ansprüche 1 bis 5, die ferner einen zweiten Wärmespeichertank (W2) umfasst, der im ersten Fach (IN1) untergebracht ist und ausschließlich zur Erzeugung von Brauchwarmwasser bestimmt ist, wobei der erste Tank (W1) ausschließlich zur Versorgung eines oder mehrerer Gebläsekonvektoren bestimmt ist.

7. Vorrichtung nach einem der vorhergehenden Ansprüche, die zusätzlich eine externe Einheit (EM) mit einem elektrischen Kompressor für das thermodynamische Fluid und einem externen Wärmetauscher vom Typ thermodynamisches Fluid/Luft umfasst.

8. Vorrichtung nach Anspruch 7, wobei ein dritter Wärmetauscher (TEC2) vom Typ Flüssigkeit/thermodynamisches Fluid dem zweiten Tank (W2) zugeordnet ist und wobei ein zweiter Wärmetauscher im zweiten Wärmespeichertank (TEW) vom Typ Flüssigkeit/Flüssigkeit untergebracht ist, der zur Warmwasserbereitung vorgesehen ist, und wobei der erste Wärmetauscher (TEC1) und der dritte Wärmetauscher von der externen Einheit (EM) angetrieben werden.

9. Vorrichtung nach Anspruch 8, wobei die externe Einheit einen einzelnen Kompressor und ein Dreiwegeventil zur wahlweisen Versorgung des ersten (TEC1) oder des dritten (TEC2) Wärmetauschers umfasst oder zwei Kompressoren zur separaten und unabhängigen Versorgung des ersten und dritten Wärmetauschers umfasst.

10. Vorrichtung nach einem der Ansprüche 1 bis 9, wobei im ersten Tank (W1) und/oder im zweiten Tank (W2) ein elektrischer Reservewiderstand (W1, W1/W2) untergebracht ist, der bei einem Ausfall der externen Maschine aktiviert wird.

11. Vorrichtung nach einem der vorhergehenden Ansprüche, wobei das Gehäuse (H) mit einem hochwertigen Material, wie z. B. einer Holzbeschichtung oder einem Lack, beschichtet ist.

12. Klimaanlage, bestehend aus einer Vorrichtung (S) nach einem der Ansprüche 1 bis 11 und einer externen Maschine (EM), die insgesamt eine Wärmepumpe bilden.

## Revendications

1. Appareil de climatisation (S) destiné à être installé à l'intérieur d'un environnement d'une habitation, comprenant :
- une enveloppe (H) définissant
• un premier compartiment (IN1)
• un deuxième compartiment (IN2) partiellement ouvert et séparé du premier compartiment (IN1), destiné à l'installation d'une bobine de ventilateur (FC),
• un troisième compartiment (IN3) destiné à l'installation d'un élément esthétique (E),
les composants suivants étant insérés dans l'enveloppe (H):
- un premier réservoir (W1) de stockage d'eau thermale,
- un premier échangeur de chaleur (TEC1) de type liquide/fluide thermodynamique, associé fonctionnellement au premier réservoir (W1),
- une bobine de ventilateur (FC) insérée dans le deuxième compartiment (IN2),
- un élément esthétique (E) inséré dans le troisième compartiment (IN3), tel qu'une bibliothèque, un aquarium ou une cheminée électrique,
**caractérisé en ce que** le premier compartiment (IN1) est fermé et le premier réservoir (W1) est inséré dans le premier compartiment; la bobine du ventilateur (FC) est connectée hydrauliquement au premier réservoir (W1) et l'élément esthétique (E) est inséré dans le troisième compartiment (IN3), de sorte qu'il est amovible pour le nettoyage et l'entretien courant.

2. Dispositif selon la revendication 1, dans lequel ledit élément esthétique comprend une cheminée électrique ou un aquarium, une bibliothèque ou un téléviseur.

3. Dispositif selon l'une des revendications précédentes, ayant la forme d'un prisme droit, dans lequel le premier compartiment (IN1) est réalisé dans une partie haute du boîtier (H) et le deuxième compartiment (IN2) entoure le troisième compartiment (IN3), formant sensiblement un C, vu de côté, autour du troisième compartiment (IN3), et dans lequel le deuxième compartiment (IN2), sous le troisième compartiment (IN3), définit un premier conduit permettant l'aspiration de l'air au niveau du sol par une ouverture inférieure (A1), et dans lequel le deuxième compartiment (IN2), immédiatement au-dessus du troisième compartiment (IN3), définit un deuxième conduit permettant l'évacuation de l'air traité par la bobine du ventilateur (FC).

4. Dispositif selon la revendication 3, dans lequel la bobine du ventilateur (FC) est positionnée approximativement à l'arrière de l'élément esthétique (E) par rapport à une vue de face (F1) du boîtier, de sorte que l'élément esthétique est exposé et visible depuis la vue de face.

5. Dispositif selon l'une quelconque des revendications 1 à 4 précédentes, dans lequel ledit premier échangeur de chaleur (TEC1) de type thermodynamique liquide/fluide est du type à plaques, disposées à l'extérieur du premier réservoir (W1) ou est du type à immersion placé à l'intérieur du premier réservoir (W1).

6. Dispositif selon l'une quelconque des revendications 1 à 5 précédentes, comprenant en outre un deuxième réservoir de stockage thermique (W2), logé dans ledit premier compartiment (IN1) et destiné exclusivement à la production d'eau chaude sanitaire, et dans lequel ledit premier réservoir (W1) est destiné exclusivement à l'alimentation d'une ou plusieures bobine de ventilateur.

7. Dispositif selon l'une quelconque des revendications précédentes, comprenant en outre une unité externe (EM) comprenant un compresseur électrique pour le fluide thermodynamique et un échangeur de chaleur externe de type fluide thermodynamique/air.

8. Dispositif selon la revendication 7, dans lequel un troisième échangeur de chaleur (TEC2) de type liquide/fluide thermodynamique est associé audit deuxième réservoir (W2) et dans lequel un deuxième échangeur de chaleur est logé dans le deuxième réservoir de stockage thermique (TEW) de type liquide/liquide, destiné à la production d'eau chaude sanitaire, et dans lequel ledit premier échangeur de chaleur (TEC1) et ledit troisième échangeur de chaleur sont alimentés par ladite unité externe (EM).

9. Dispositif selon la revendication 8, dans lequel ladite unité extérieure comprend un seul compresseur et une vanne trois voies pour alimenter sélectivement le premier (TEC1) ou le troisième (TEC2) échangeur de chaleur, ou comprend deux compresseurs pour alimenter séparément et indépendamment lesdits premier et troisième échangeurs de chaleur.

10. Dispositif selon l'une quelconque des revendications 1 à 9, dans lequel une résistance électrique de secours (W1, W1/W2) est logée dans ledit premier réservoir (W1) et/ou dans ledit deuxième réservoir (W2), configurés pour s'activer en cas de défaillance de la machine externe.

11. Dispositif selon l'une quelconque des revendications précédentes, dans lequel ledit boîtier (H) est revêtu d'un matériau précieux, tel qu'un revêtement en bois ou un vernis.

12. Système de climatisation comprenant un dispositif (S) selon l'une quelconque des revendications 1 à 11 et une machine externe (EM) pour former, dans son ensemble, une pompe à chaleur.
